# EUROPEAN PATENT APPLICATION

(11) **EP 3 376 584 A1**
(43) Date of publication of application: **19.09.2018**
(21) Application number: 17161490.2
(22) Date of filing: 17.03.2017
(51) Int. Cl.: H01M 10/42, H01M 2/04, H01M 2/26, H01M 2/02

(54) **FAST DISCHARGE AND/OR SHUT DOWN COMPONENT, HOUSING COMPONENT, BATTERY CELL, CELL MODULE, BATTERY, AND APPARATUS**

(71) Applicant: Lithium Energy and Power GmbH & Co. KG, 70469 Stuttgart (DE)
(72) Inventor: Postler, Florian, 96110 Schesslitz (DE)
(74) Representative: Bee, Joachim

(57) **Abstract**

The present invention concerns a fast discharge and/or shut down component (40') for an underlying battery cell (10), which comprises a fast discharge and/or shut down unit (30) configured to conditionally and controllably short-circuit the underlying battery cell (10) and which is formed as a housing component (40) or as a part thereof of an outer housing (18) of the underlying battery cell (10).

## Description

### State of the Art

The present invention concerns a fast discharge and/shut down component for a battery cell, a housing component for an outer housing of a battery cell, a battery cell as such, a cell module, a battery, and an apparatus, in particular a vehicle.

Recent growth of electronic industry has increased the demand for high performance, compact and portable electronic devices. Such electronic devices require batteries with high energy density and capacity. Particularly suitable for this purpose are nickel-rich and lithium-rich batteries. However, such batteries bear problems in case of battery cell failure or battery cell abuse. As a consequence, the battery may show undesired hazardous behavior, such as degassing, development of fire and explosion.

US 2009/0092891 A discloses a secondary battery having a side case coupled to the secondary battery in a sliding manner in order to cover sides of the secondary battery. US 2011/0200849 A describes a rechargeable battery having a short circuit inducing member adapted in order to induce a short circuit in the rechargeable battery when the shape of the rechargeable battery is changed.

In order to avoid such a hazardous behavior, battery cells have been equipped with fast discharge and/or shut down units, for instance together with certain separator configurations within the electrochemical part. The fast discharge and/or shutdown units may be configured in order to discharge the electrochemical part via a resistor to be connected between the battery cell terminals in order to reduce the energy amount stored in the electrochemical part and in particular to simultaneously increase the temperature of the separator within the electrochemical part in order to cause an at least partial impermeability of the separator with respect to a certain kind of ions, thereby achieving an irreversible passivation of the underlying battery cell.

In view of the safety aspects, the provision of a fast discharge and/or shut down unit poses certain problems in view of the desired integration with the battery cell. Reasons for this are inter alia that a short and/or low-resistance current path between the cell interior and the fast discharge and/or shut down unit is necessary and that a direct contact between the electrolyte component and the fast discharge and/or shut down unit has to be avoided.

### Disclosure of the invention

The fast discharge and/or shut down component according to the present invention as defined in independent claim 1, however, has the advantage of enabling a simple integration of a fast discharge and/or shut down unit with a battery cell with reduced space requirements and offering low resistance current paths. This is achieved by the fast discharge and/or shut down component for an underlying battery cell according to independent claim 1, by having comprised in the fast discharge and/or shut down component a fast discharge and/or shut down unit which is configured in order to conditionally and controllably short-circuit the underlying battery cell, wherein the fast discharge and/or shut down component is formed as a housing component or as a part thereof, namely of or for an outer housing of or for the underlying battery cell. With these requirements a less space consuming and more direct integration of the required fast discharge and/or shut down unit in view of an underlying battery cell can be realized, namely by integrating the unit as or within a part of the housing component of an outer housing of the underlying battery cell.

This aspect of the present invention therefore focuses on the fast discharge and/or shut down component and its concept as such.

Alternatively, the present invention focuses on a housing component for an outer housing of an underlying battery cell. According to the present invention the housing component comprises a fast discharge and/or shut down unit for a battery cell configured in order to conditionally and controllably short-circuit the underlying battery cell. These measures again provide a less space consuming and more direct integration of the required fast discharge and/or shut down unit or device in view of an underlying battery cell, namely by having comprised within the housing component the fast discharge and/or shut down unit or device.

The dependent claims contain advantageous embodiments of the present invention.

According to a preferred embodiment of the present invention the respective component may be formed as a cover, coverage, lit or cap.

Additionally or alternatively, the component may comprise a first portion configured in order to be connected or to be connectable to a first battery cell terminal of the underlying battery cell, a second portion configured in order to be connected or to be connectable to a second battery cell terminal of the underlying battery cell, and/or at least said fast discharge and/or shut down unit as an intermediate portion therebetween providing (i) an electric insulation between said first and second portions in its normal and non-activated state and (ii) a direct electric connection in its triggered and activated state. By a combination of these measures a particular reliable and less space consuming realization of a conditional and controllable electric disconnection or connection between the battery cell terminals of an underlying battery cell can be achieved.

The functionality of the component according to the present invention is further enhanced, if said fast discharge and/or shutdown unit is configured in order to controllably connect the battery cell terminals of the underlying battery cell in parallel to an electrochemical part thereof and in order to discharge and/or to shut down the battery cell under first predetermined conditions by connecting the battery cell terminals via a resistor and by means of a discharge switching element.

The fast discharge and/or shut down unit may be configured in order to discharge the underlying battery cell by means of a first current flowing through the battery cell and the fast discharge and/or shut down unit and by connecting the first and second battery cell terminals via the resistor and by means of the discharge switching element.

The resistor may in particular be selected in order to cause the first current during a current flow through the underlying battery cell and through the fast discharge and/or shut down unit and in order to heat the electrochemical part of the underlying battery cell such that a separator of the underlying battery cell reaches the predefined temperature for shut down by passivation.

Additionally or alternatively, the resistance may be selected in order to avoid a thermal runaway of the underlying battery cell during the heating of the electrochemical part by the first current flowing through the electrochemical part and through the fast discharge and/or shut down unit.

It is a further aspect of the present invention to provide a battery cell as such. The battery cell according to the present invention comprises first and second battery cell terminals for an external contact of the battery cell, an electrochemical part, preferably formed as or comprising a configuration of a jelly roll or of an electrode stack and connected to the battery cell terminals, and an outer housing having a component according to the present invention.

The battery cell and the outer housing may be one of an all- or an entire-contact type, a nutshell type and a pouch type. Regarding the pouch type, a sealing rim may be used for realizing the integration concept underlying the present invention, namely in view of a fast discharge and/or shut down unit to be integrated.

According to a preferred embodiment of the battery cell the fast discharge and/or shut down unit is connected to the battery cell terminals in parallel to the electrochemical part and configured in order to discharge and/or to shut down the battery cell under first predetermined conditions by connecting the battery cell terminals via the resistor by means of the discharge switching element.

The electrochemical part may comprise a positive electrode, a negative electrode, an electrolyte component having a conductive salt component and a solvent component, and a separator.

The separator may be configured in order to become at least partially impermeable for ions generated inside of the electrochemical part upon reaching a predefined temperature.

The fast discharge and/or shut down unit may be configured in order to discharge the battery cell by means of a first current flowing through the battery cell and the fast discharge and/or shut down unit by connecting the first and second battery cell terminals via the resistor of the fast discharge and/or shut down unit and by means of the discharge switching element thereof.

Additionally or alternatively, the resistor may be selected in order to cause the first current during a current flow through the battery cell and through the fast discharge and/or shut down unit to heat the electrochemical part such that the separator reaches the predefined temperature.

For safety reasons, the resistance of the fast discharge unit may also be selected in order to avoid a thermal runaway of the battery cell during the heating of the electrochemical part by the first current flowing through electrochemical part and through the fast discharge and/or shut down unit.

The individual battery cells may be defined in different ways without departing from the gist of the present invention.

It is of particular advantage if a respective battery cell comprises first and second battery cell terminals for an external contact of the battery cell, e.g. within the cell arrangement or cell module, e.g. in connection with other neighboring battery cells of the plurality of battery cells, an electrochemical part, preferably formed as or comprising a jelly roll or an electrode stack configuration, connected to the battery cell terminals and/or a direct or indirect electric connection to a fast discharge and/or shut down unit of an underlying safety portion connected to the battery cell terminals in parallel to the electrochemical part and configured in order to discharge and/or to shut down the battery cell under first predetermined conditions by connecting the battery cell terminals via a resistor.

Additionally or alternatively, in a respective battery cell the electrochemical part may comprise a positive electrode, a negative electrode, an electrolyte component having a conductive salt component and a solvent component, and a separator.

The separator may be configured in order to become at least partially impermeable for ions generated inside of the electrochemical part upon reaching a predefined temperature. Such a process realizes a controllable and conditional passivation of a battery cell or a plurality thereof.

Within a few milliseconds after activation of a fast discharge and/or shut down the charge carriers in front of the electrodes are discharged very fast. This leads to a depletion of charge carriers in front of the electrodes and causes a first strong polarization of the electrodes. Within the next few hundred milliseconds, in a second step, the charge carriers already existing in the electrolyte will be discharged very fast in comparison to the slower deinsertion/insertion reaction of the electrodes, to the slow diffusion through the solid-electrolyte interface (SEI) and to the slow diffusion in the active material. This causes a strong separation of charge carries in front of the electrode which causes a further increasing of electrode polarization and a high voltage drop of the battery cell and a first plateau phase is reached.

The faster the discharge, the higher is the safety behavior of the battery cell, because the discharge current rapidly decreases and the warming of the battery cell is not locally fixed at a damage zone. Therefore, the total warming of the battery cell is low compared to the local warming in case of a short circuit.

The present invention further concerns a cell module which is formed by a plurality or an arrangement of plural battery cells according to the present invention.

A battery according to the present invention is formed by a plurality of cell modules and/or by a plurality of battery cells formed according to the present invention.

According to a preferred embodiment of the inventive battery, the plurality of battery cells is configured as a plurality of pairs of battery cells, wherein at least one of the members of the pairs of battery cells is formed according to the present invention. It is of particular advantage that in the pairs it is sufficient that one of the members of the pairs is provided with the inventive concept of having a separation means. This reduces the burden of establishing the respective equipment.

However, a more preferred embodiment of the present invention provides for each battery cell of the plurality of battery cells a configuration according to the present invention, namely by establishing for each battery cell in the battery an individual fast discharge unit together with a respective control unit in particular with respective control parts and/or actuating and/or signaling parts.

Eventually an apparatus and in particular a vehicle are provided. The apparatus formed according to the present invention comprises an operation part and an energizing part for energizing the operation part. The energizing part comprises one or a plurality of battery cells, cell modules and/or batteries formed according to the present invention.

### Brief description of the drawings

In the following section embodiments of the present invention are disclosed with reference to the enclosed figures.
- Figure 1: gives a schematic side view of an embodiment of an apparatus according to the present invention based on an embodiment of the battery cell according to the present invention and using the inventive concept of providing a fast discharge and/or shut down component formed as a housing component or a part thereof or of providing a housing component having a fast discharge and/or shut down unit.
- Figure 2: gives a schematic side view of another embodiment of a battery cell according to the present invention.
- Figures 3 and 4: elucidate by means of different views a battery cell according to the present invention and based on the so-called prismatic cell concept.
- Figures 5 to 7: demonstrate the so-called entire-contact type of a battery cell formed according to the present invention.

### Embodiments of the present invention

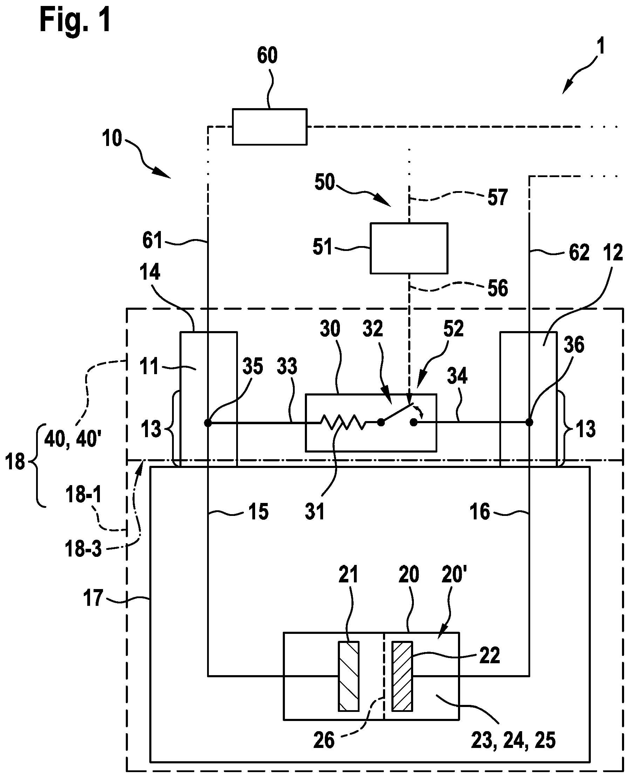

In the following, embodiments and the technical background of the present invention are described in detail by taking reference to accompanying figures 1 to 7. Identical or equivalent elements and elements which act identically or equivalently are denoted with the same reference signs. Not in each case of their occurrence a detailed description of the elements and components is repeated.

The depicted and described features and further properties of the invention's embodiments can arbitrarily be isolated and recombined without leaving the gist of the present invention.

Figure 1 gives a schematic side view of an embodiment of an apparatus 1 according to the present invention based on an embodiment of the battery cell 10 according to the present invention and using the inventive concept of providing a fast discharge and/or shut down component 40' formed as a housing component 40 or a part thereof or of providing a housing component 40 having a fast discharge and/or shut down unit or device 30.

The battery cell 10 shown in figure 1 comprises in a first or inner housing 17 an electrochemical part 20 which is formed by a first or positive electrode 21, a second or negative electrode 22 and an electrolyte component 23 having at least one salt component 24 and at least one solvent component 25.

The electrodes 21, 22 are immersed in the electrolyte 23 and they are separated by a separator 26 which has the property of becoming at least partially impermeable upon reaching from below a predetermined temperature threshold for one or several ion species generated in the battery cell 10.

The battery cell 20 is connected via terminal lines 15 and 16 to first and second battery cell terminals 11, 12 which are configured for establishing an external contact, e.g. for supplying electric power via supply lines 61, 62 to a load 60 offered by a particular external device in order to run the device providing the load 60.

Each of the first and second battery terminals 11, 12 comprises a connection side part 13 for establishing a connection to the battery cell 20 and its terminal lines 15, 16 on the one hand and a fast discharge unit 30 to be described below on the other hand.

In addition, the first and second battery terminals 11, 12 also comprise an external side part 14 for being contacted to respective supply lines 61, 62 connected to the load 60.

In addition to the terminal lines 15, 16 for connecting the battery cell 20, at connection nodes 35, 36 discharge lines or contacts 33 and 34 are provided in the connection side part 13 for connecting to the connection side parts 13 of the first and second battery cell terminals 11, 12 the fast discharge unit 30 which is configured in order to perform a fast discharge of the battery cell 20 under certain conditions and in order to thereby avoid hazardous situations.

As shown schematically in figure 1, this may be done by operating a discharge switch 32 for closing the connection between the connection nodes 35 and 36 for discharging the battery cell 10 and its electrochemical part 20 via the serially enclosed discharge resistor 31 having an appropriate resistance value.

On the one hand, the resistance value of the resistor 31 is chosen in order to achieve a discharge of the battery cell 20 as fast as possible but simultaneously to avoid a thermal run array of the battery cell 10 and its electrochemical part 20.

In order to further support the safety aspects implemented by the fast discharge and shut down unit 30, a control unit 50 may be provided.

The control 50 with its control part 51 is configured to trigger by the trigger line 56 and the trigger probe 52 the discharge switch 32 of the underlying fast discharge and/or shut down unit 30.

The operations of the fast discharge and/or shut down unit 30 on the one hand and of the control unit 50 on the other hand may be triggered by first and second predetermined conditions which may also be equal and/or which may depend on each other.

The control unit 50 comprises said control part 51 and may be connected via a sensor and/or determination line 57 to a sensor or any other determination unit.

This sensor line 57 may be realized wirelessly or may be based on any kind of connection line. The sensor line 57 may be referred to as an external connection.

Via the trigger line 56 referred to as an external connection, the control part 51 of the control unit 50 is capable of conditionally initiating operating the fast discharge and/or shut down unit 30.

In addition, via connection with trigger line 56, the control part 51 and in particular the entire control unit 50 may be separated and externally be mounted with respect to the battery cell 10 and/or the fast discharge and/or shut down unit 30.

The conditions for operating the fast discharge and/or shut down unit 30 may be settled based on the conditions and on the operation state of the electrochemical part 20 of the battery cell 10 and/or additionally on external fast discharge and/or shut down conditions, for instance of other and spatially separated battery cells 10, other modules 110 or batteries 100.

These external conditions may be due to the externally and/or remotely positioning and/or the signaling of a signaling part and/or may be realized based on sensing a physical property established externally to the battery cell 10.

According to the present invention the second or outer housing 18 of the battery cell 10 of figure 1 embraces all its components and in particular the first or inner housing 17 with the electrochemical part 20, the terminal lines 15 and 16 yielding into the first and second battery cell terminals 11 and 12 for externally distributing the electric power generated by the electrochemical part 20. In addition the second or outer housing 18 also comprises the fast discharge and/or shut down unit 30 connected to the terminal lines 15, 16 and to the cell terminals 11, 12 by having contacted the discharge lines 33, 34 via connection nodes 35, 36.

As can be seen from figure 1, the second or outer housing 18 is divided into the first or main housing component or part 18-1 carrying the first or inner housing 17 and the electrochemical part 20 contained therein. In addition the second or outer housing 18 also comprises as a part thereof a second housing component or part 40, in particular as a cover attached at the interface 18-3 formed at an upper portion of the first or main housing component or part 18-1, and also forming the fast discharge and/or shut down component 40' according to the present invention.

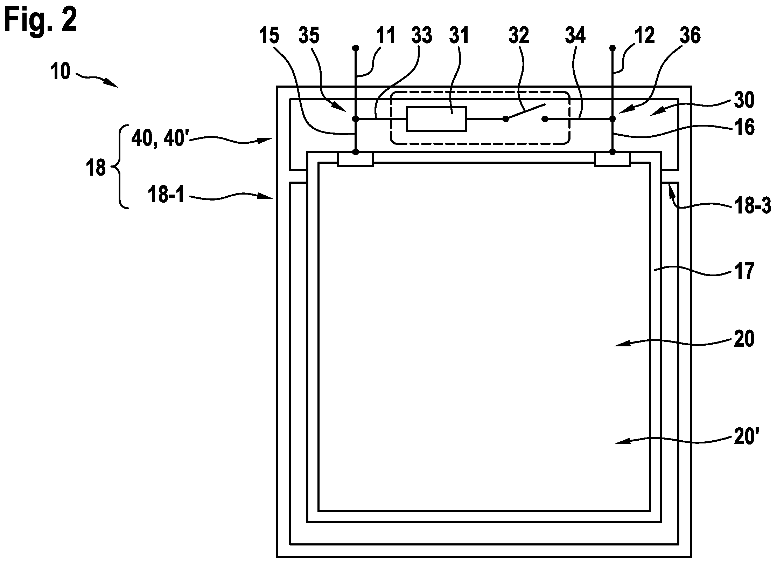

Figure 2 gives a schematic side view of another embodiment of a battery cell 10 according to the present invention.

Again, the electrochemical part 20 and its jelly roll or an electrode stack 20' and the other electrochemical components are contained within and in a housing 17 from which terminal lines 15 and 16 lead to first and second battery cell terminals 11 and 12. At connection nodes 35 and 36 discharge lines 33 and 34 of the fast discharge and/or shut down unit 30 are connected comprising in series a discharge resistor 31 and a controllably and conditionally operable discharge switch 32. But discharge switch 32 is normally in an open state, if the fast discharge and/or shut down unit 30 is not operated, activated or triggered. Thus, connection nodes 35 and 36 are normally electrically disconnected and electric power is distributed via terminal lines 15 and 16 to the first and second battery cell terminals 11 and 12.

The second or outer housing 18 is formed with the second housing component or part 40 attached to the interface 18-3 at the upper portion of the first or main housing component or part 18-1.

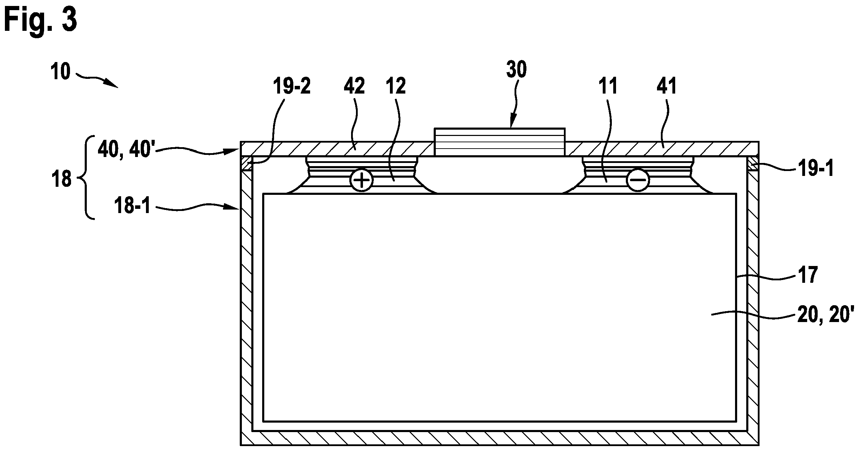

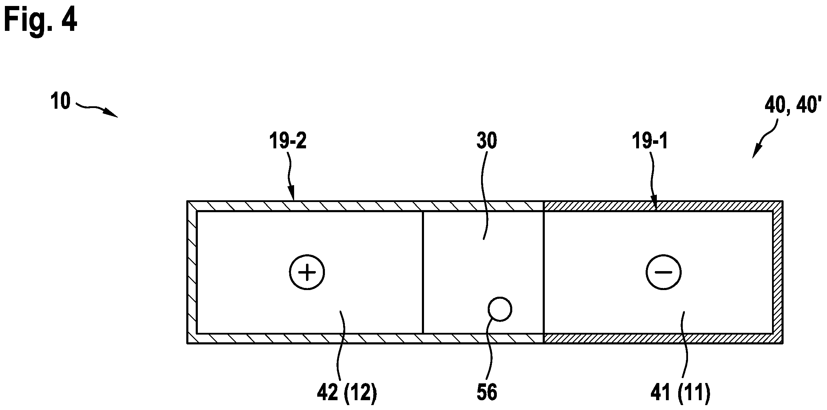

Figures 3 and 4 elucidate by means of different views a battery cell 10 according to the present invention and based on the so-called prismatic cell concept.

The first or inner housing 17 with the electrochemical part 20 and the jelly roll or an electrode stack 20' are embraced by the second or outer housing 18 and in particular its main component 18-1 thereof. The second housing component 40 forms a cover thereby having included or embraced the fast discharge and/or shut down unit 30 as a fast discharge and/or shut down component 40' according to the present invention.

As can be seen more clearly from figure 4, the second housing component 40 is formed by a first portion 41 connected to the first battery cell terminal 11 in electric connection with a first and negative electrode 21 and by a second portion 42 which is connected to the second battery cell terminal 12 in electric connection with a second and positive electrode 22. The first and second portions 41 and 42 are separated and electrically insulated with respect to each other by having sandwiched therebetween the fast discharge and/shut down unit or device 30 with its connection to an external trigger line 56 for being conditionally and/or controllably operated under certain shut down and/or discharge conditions.

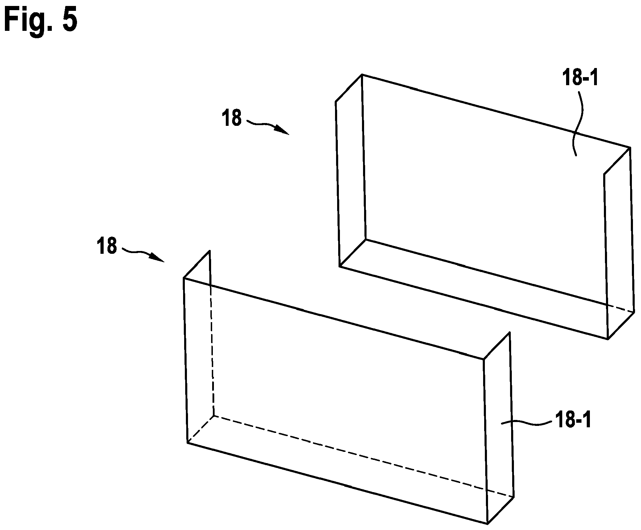

Figures 5 to 7 demonstrate the so-called entire-contact type battery cell 10 formed according to the present invention.

The second or outer housing 18 is formed by a pair of identical half-shells 18-1 forming the first or main housing component of the second or outer housing 18 and offering in an upper part an opening when attached to each other.

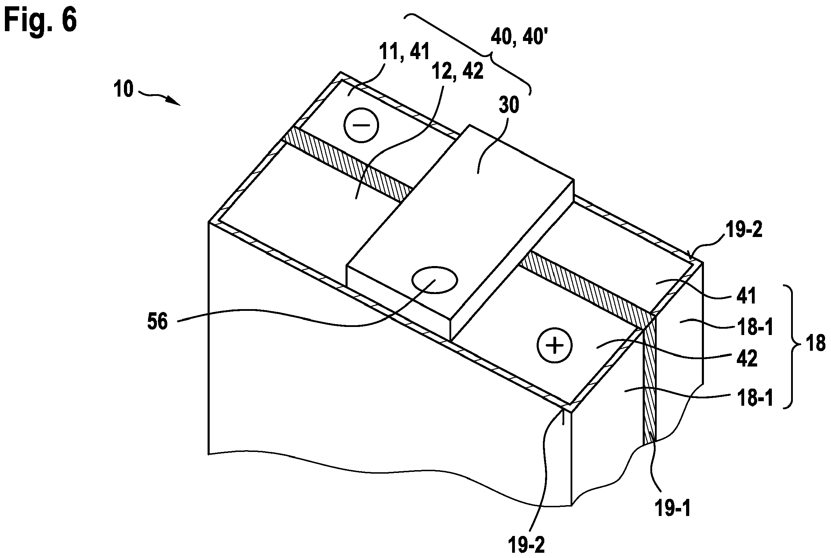

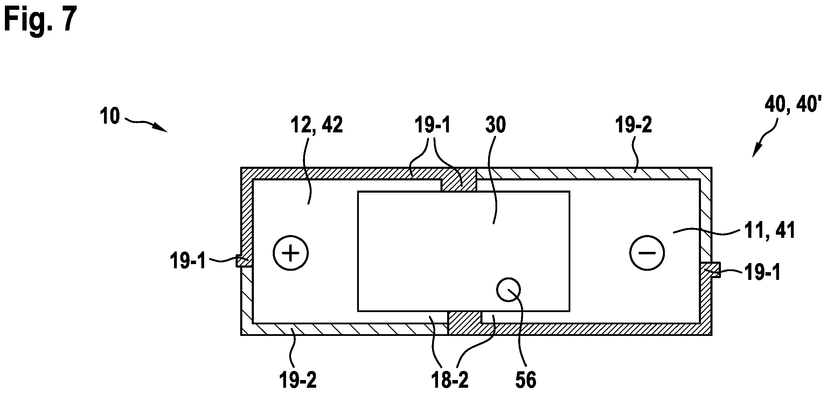

As can be seen from figure 6 and 7, the opening may be closed by a second housing component 40 forming a fast discharge and/shut down component 40' according to the present invention and comprising a fast discharge and/or shut down unit or device 30 mechanically connecting the first and second portions 41 and 42 of the second housing component 40 and giving an electric insulation therebetween which can be irreversibly changed into an electric connection for short-circuiting the underlying first and second battery cell terminals 11 and 12.

In order to achieve for normal operating conditions the necessary electric configuration, accordingly configured first or electrically insulating connections 19-1 and second and electrically conducting connections 19-2 have to be provided as indicated in figures 6 and 7, too.

These and further features, properties and advantages of the present invention will be further discussed in the following:

The so-called FDD or fast discharge and/or shut down unit or device 30 (FDD) is an element which, in the case of damage, e.g. in the case of a nail penetration test, short-circuits a battery cell 10 in order to achieve the lowest possible hazard level.

Currently a major problem of the FDD is that the integration with the battery cell 10 is very difficult. Reasons for this are that a short and/or low-resistance current path between the cell interior and FDD 30 is necessary, currently of less than 150 µΩ, and that the FDD 30 must not be located in the cell, i.e. there must be no contact with the electrolyte component 23.

This leads to a variety of opposing problems:
(1) On the one hand, the FDD 30 must be arranged very closely to the active material of the cell 10 and its electrochemical part 20, e.g. the stack or the jelly roll 20'.
(2) On the other hand, the FDD 30 must not be located within the cell's electrochemical part 20 because it must not be in contact with electrolyte 23.
(3) Furthermore, the FDD 30 must be located outside the cell's electrochemical part 20 or even outside the entire cell 10 for thermal reasons.
(4) The removal of the FDD 30 from the cell 10 and from its electrochemical part 20 accordingly requires an intermediate element, for example a lead, which however increases the electrical resistance of the involved current path.

The invention is intended to make it possible to integrate a FDD 30 very closely to the electrode assembly 20' in the cell 10.

Furthermore, all specifications such as those outside the cell 10 and the formation of short and / or low-resistance current paths as well as a small installation space are to be adhered to.

In the inventive solution, the FDD 10 is configured in order to replace a component of a conventional cell and in particular of its casing or housing by assuming, for example, the role of cover or lid of the outer cell housing 18 in the sense of a second housing component 40.

The electrode assembly 20' of the electrochemical part 20 is connected directly to the inside of the FDD 30. The functional elements of the FDD 30, for example an anti-fuse element, for example in the manner of a nanofoil, the connection of the electronics and the like, may lie at an outside.

In the embodiments according to the present invention shown in the figures, all the necessary prerequisites for the integration of the FDDs 30 are given.

The FDD 30 is situated outside the electrochemical part 20 and is connected within. This means (i) that there are short current paths, (ii) that there are no thermal problems, and (iii) that there is a reduced space requirement.

The connection of the electronics from the outside is possible. The current taps for the terminals 11, 12 of the cell 10 are also carried out via the FDD 30. That is, directly current collectors and the like can be mounted.

Key benefits include (a) improved volume utilization, (b) a simplified design, (c) a smaller number of parts, (d) a more robust design, (e) a shortened current path, (f) as well as usability for conventional cells and for full contact cells.

Figure 3 shows a FDD 30 according to the invention constructed as a cover 40, welded on a prismatic cell 10. The FDD 30 is directly welded to the electrode assembly or stack 20' of the electrochemical part 20. On one side, the FDD 30 is welded to the outer housing 18, here the connection to the positive pole with the second terminal 12. The other side of the FDD 30 must be isolated from the outer housing 18 by the insulation 19-1. The current tap of the cell is realized via the FDD 30.

Figure 4 shows the cell 10 described above. In particular, its location is shown to be where the cell 10 is directly welded to the can as an outer housing 18, and where insulation 19-1 has to be ensured with respect to the can 18.

Figures 5 to 7 show the integration of the cover 40 into a battery cell 10 of a full contact type, for example in the manner of a so-called nut shell. In this case, half-shells 18-1 have to be used, which are opened on a further side. The cover 40 is later applied in form of a lid 40 and carrying the FDD 30 as such thereby forming the fast discharge and/or shut down component of the battery cell 10.

Figure 6 shows an FDD 10 with the half-shells 18-1 and with the insulation 19-1, here in the manner of a retainer, as a complete full-contact cell 10.

An advantage here is that the FDD 30 can be completely welded with both half shells 18-1.

Figure 7 shows another variant of the cover 40 for the FDD component 40' for a full-contact cell in top view.

## Claims

1. Fast discharge and/or shut down component (40') for an underlying battery cell (10),
- which comprises a fast discharge and/or shut down unit (30) configured in order to conditionally and controllably short-circuit the underlying battery cell (10) and
- which is formed as a housing component (40) or as a part thereof of an outer housing (18) of the underlying battery cell (10).

2. Housing component (40) for an outer housing (18) of an underlying battery cell (10),
which comprises a fast discharge and/or shut down unit (30) for a battery cell (10) configured in order to conditionally and controllably short-circuit the underlying battery cell (10).

3. Component (40, 40') according to claim 1 or 2,
wherein the housing component (40)
- is formed as a cover, coverage, lit or cap and/or
- comprises
- a first portion (41) configured in order to be connected or to be connectable to a first battery cell terminal (11) of the underlying battery cell (10),
- a second portion (42) configured in order to be connected or to be connectable to a second battery cell terminal (12) of the underlying battery cell (10), and
- at least said fast discharge and/or shut down unit (30) as an intermediate portion therebetween providing (i) an electric insulation between said first and second portions (41, 42) in its normal and non-activated state and (ii) a direct electric connection in its triggered and activated state.

4. Component (40, 40') according to claim 3,
wherein said fast discharge and/or shutdown unit (30) is configured in order to controllably connect the battery cell terminals (11, 12) of the underlying battery cell (10) in parallel to an electrochemical part (20) thereof and in order to discharge and/or to shut down the battery cell (10) under first predetermined conditions by connecting the battery cell terminals (11, 12) via a resistor (31) and by means of a discharge switching element (32).

5. Component (40, 40') according to claim 4, wherein
- the fast discharge and/or shut down unit (30) is configured in order to discharge the underlying battery cell (10) by means of a first current flowing through the battery cell (10) and the fast discharge and/or shut down unit (30) and by connecting the first and second battery cell terminals (11, 12) via the resistor (31) and by means of the discharge switching element (32),
- the resistor (31) is in particular selected in order to cause the first current during a current flow through the underlying battery cell (10) and through the fast discharge and/or shut down unit (30) and in order to heat the electrochemical part (20) of the underlying battery cell (10) such that a separator (26) of the underlying battery cell (10) reaches the predefined temperature for shut down by passivation, and/or
- the resistance (31) is selected in order to avoid a thermal runaway of the underlying battery cell (10) during the heating of the electrochemical part (20) by the first current flowing through electrochemical part (20) and through the fast discharge and/or shut down unit (30).

6. Battery cell (10), comprising:
- first and second battery cell terminals (11, 12) for an external contact of the battery cell (10),
- an electrochemical part (20), preferably formed as or comprising a configuration of a jelly roll or of an electrode stack (20') and connected to the battery cell terminals (11, 12), and
- an outer housing (18) having a component (40, 40') according to any one of claims 1 to 5,
wherein the battery cell (10) and the outer housing (18) are one of an all- or entire-contact type, a nutshell type and a pouch type.

7. Battery cell (10) according to claim 6,
wherein the fast discharge and/or shut down unit (30) is connected to the battery cell terminals (11, 12) in parallel to the electrochemical part (20) and configured in order to discharge and/or to shut down the battery cell (10) under first predetermined conditions by connecting the battery cell terminals (11, 12) via the resistor (31) by means of the discharge switching element (32).

8. Battery cell (10) according to claim 6 or 7, wherein
- the electrochemical part (20) comprises a positive electrode (21), a negative electrode (22), an electrolyte component (23) having a conductive salt component (24) and a solvent component (25), and a separator (26),
- the separator (26) is configured in order to become at least partially impermeable for ions generated inside of the electrochemical part (20) upon reaching a predefined temperature,
- the fast discharge and/or shut down unit (30) is configured in order to discharge the battery cell (10) by means of a first current flowing through the battery cell (10) and the fast discharge and/or shut down unit (30) by connecting the first and second battery cell terminals (11, 12) via the resistor (31) of the fast discharge and/or shut down unit (30) and by means of the discharge switching element (32) thereof,
- the resistor (31) is in particular selected in order to cause the first current during a current flow through the battery cell (10) and the fast discharge and/or shut down unit (30) to heat the electrochemical part (20) such that the separator (26) reaches the predefined temperature, and/or
- the resistance (31) of the fast discharge unit (30) is selected in order to avoid a thermal runaway of the battery cell (10) during the heating of the electrochemical part by the first current flowing through the electrochemical part (20) and through the fast discharge and/or shut down unit (30).

9. Cell module, comprising a plurality of battery cells (10) according to any one of claims 6 to 8.

10. Battery, comprising a plurality of cell modules according to claim 9 and/or a plurality of battery cells (10) according to any one of claims 6 to 8.

11. Apparatus (1) and in particular vehicle, comprising:
- an operation part and
- an energizing part for energizing the operation part,
wherein the energizing part is or comprises one or a plurality of battery cells (10) according to any one of claims 6 to 8, cell modules according to claim 9 and/or batteries according to claim 10.
